# EUROPEAN PATENT APPLICATION

(11) **EP 1 883 182 A1**
(43) Date of publication of application: **30.01.2008**
(21) Application number: 07005832.6
(22) Date of filing: 21.03.2007
(51) Int. Cl.: H04L 12/28, H04L 12/56

(54) **Method and system for a mobile piconet base station**

(30) Priority: 26.07.2006 US 460139
(71) Applicant: Broadcom Corporation, Irvine, CA 92617 (US)
(72) Inventor: Brima, Ibrahim, Irvine California 92618-7013 (US); Hea, Joung Kim, Irvine California 92618-7013 (US)
(74) Representative: Jehle, Volker Armin

(57) **Abstract**

Aspects of a method and system for a mobile piconet base station are provided. Switching and/or routing capabilities in mobile handset may enable wireless devices to communicate with each other and/or with a wireless network via the mobile handset. The mobile handset operates as a base station for wireless devices within a personal area or piconet. For voice communication, for example, communication between a wireless device within the piconet and a cellular network or a voice-over-IP (VoIP) network may be established via the mobile handset. The selection between the cellular or VolP network may be based on rate price and/or on features available in each of the networks, for example. Communication between the wireless devices and the base station mobile handset may occur via a Bluetooth connection and/or another type of wireless technology, for example. The wireless devices may be low-cost, small form factor mobile handsets, for example.

## Description

### CROSS-REFERENCE TO RELATED APPLICATIONS/INCORPORATION BY REFERENCE

Not Applicable.

### FIELD OF THE INVENTION

Certain embodiments of the invention relate to wireless communication networks. More specifically, certain embodiments of the invention relate to a method and system for a mobile piconet base station.

### BACKGROUND OF THE INVENTION

More people everywhere in the world are using mobile phones. The continued growth in mobile phone use has been driven in part by the fact that wireless networks that support mobile phone usage have been deployed with more ease and at a lower cost than new wired networks, increasing the availability and coverage of mobile phone service. Factors such as the continued reduction in cost of the phones, the convenience and attractiveness of their small form factor, and/or the increase in features being made available in the phones themselves and by the service providers, have also played a significant role in the popularity of mobile phones. In this regard, the development of new technologies that have enabled low cost designs, small size devices, and/or added user features have been necessary in making mobile phones an attractive choice that, in some instances, has become an alternative to conventional wireline phones.

The increased processing capabilities made available by these new technologies are also enabling smarter mobile phone designs. Smart phones not only allow the user to make or receive calls, but may also operate as personal digital assistants providing features such as email, document processing, and/or task management, for example. Smart phones may also enable wireless connectivity with nearby devices such as headphones, keyboards, printers, and/or speakers, for example. In some instances, smart phones may also provide built-in music and/or video playing capabilities.

However, the growing numbers of features provided by smart phones, the need for large storage space, especially for audio and video applications, and the battery size requirements are resulting in bulkier and heavier devices, making them somewhat unattractive as substitutes for a user's existing or primary mobile phone. While smart phones tend to introduce additional features as technologies continue to improve, conventional mobile phones have instead utilized technological advances to make possible fashionable and/or small designs that are attractive as accessories to younger users. In this regard, there is a need to provide the expanding list of features and applications that are becoming available in smart phone designs in a manner that is convenient, practical, and/or attractive to a user of a conventional mobile phone.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for a mobile piconet base station, substantially as shown in and/or described in connection with at least one of the figures, as set forth more completely in the claims.
According to an aspect of the invention, a method is provided for wireless networking, the method comprising:
communicating via at least one of switching and routing capabilities in a mobile handset, information between a wireless device and at least one of a wireless network and an additional wireless device.
Advantageously, the method comprises establishing communication between said wireless device and said additional wireless device via said mobile handset.
Advantageously, the method comprises establishing communication between said wireless device and said wireless network via said mobile handset.
Advantageously, the method comprises dynamically selecting said wireless network between a cellular network and a voice-over-IP (VoIP) network for voice communication.
Advantageously, said dynamically selecting between said cellular network and said VolP network is based on cost associated with said voice communication in each of said networks.
Advantageously, the method comprises communicating between said mobile handset and said wireless device via a Bluetooth connection.
Advantageously, the method comprises communicating between said mobile handset and said additional wireless device via a Bluetooth connection.
Advantageously, said wireless device is a mobile handset.
According to an aspect of the invention, a machine-readable storage is provided having stored thereon, a computer program having at least one code section for wireless networking, the at least one code section being executable by a machine for causing the machine to perform steps comprising:
communicating via at least one of switching and routing capabilities in a mobile handset, information between a wireless device and at least one of a wireless network and an additional wireless device.
Advantageously, the machine-readable storage further comprises code for establishing communication between said wireless device and said additional wireless device via said mobile handset.
Advantageously, the machine-readable storage further comprises code for establishing communication between said wireless device and said wireless network via said mobile handset.
Advantageously, the machine-readable storage further comprises code for dynamically selecting said wireless network between a cellular network and a voice-over-IP (VoIP) network for voice communication.
Advantageously, said dynamically selecting between said cellular network and said VolP network is based on cost associated with said voice communication in each of said networks.
Advantageously, the machine-readable storage further comprises code for communicating between said mobile handset and said wireless device via a Bluetooth connection.
Advantageously, the machine-readable storage further comprises code for communicating between said mobile handset and said additional wireless device via a Bluetooth connection.
Advantageously, said wireless device is a mobile handset.
According to an aspect of the invention, a system is provided for wireless networking, the system comprising:
a mobile handset having at least one of switching and routing capabilities, the mobile handset enables communication of information between a wireless device and at least one of a wireless network and an additional wireless device via said at least one of switching and routing capabilities.
Advantageously, said mobile handset enables establishing communication between said wireless device and said additional wireless device.
Advantageously, said mobile handset enables establishing communication between said wireless device and said wireless network.
Advantageously, said wireless network comprises a cellular network and a voice-over-IP (VoIP) network, and said mobile handset enables dynamically selecting between said cellular network and said voice-over-IP (VoIP) network for voice communication.
Advantageously, said mobile handset enables dynamically selecting between said cellular network and said VolP network based on cost associated with said voice communication in each of said networks.
Advantageously, said mobile handset enables communication between said mobile handset and said wireless device via a Bluetooth connection.
Advantageously, said mobile handset enables communication between said mobile handset and said additional wireless device via a Bluetooth connection.
Advantageously, said additional wireless device is a mobile handset.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a diagram illustrating an exemplary cellular network coverage area, in accordance with an embodiment of the invention.

FIGS. 1B-1C are diagrams illustrating exemplary personal network regions or piconets associated with a mobile handset base station in the cellular network in FIG. 1A, in accordance with an embodiment of the invention.

FIG. 2A is a diagram illustrating an exemplary wireless local area network (WLAN) coverage area, in accordance with an embodiment of the invention.

FIG. 2B is a diagram illustrating exemplary cellular and WLAN networks for communicating with a mobile handset base station, in accordance with an embodiment of the invention.

FIG. 3 is a block diagram illustrating an exemplary system for a mobile handset base station, in accordance with an embodiment of the invention.

FIG. 4A is a diagram illustrating exemplary communication within a piconet via a mobile handset base station, in accordance with an embodiment of the invention.

FIG. 4B is a diagram illustrating an exemplary mode of operation for communicating between a wireless network and a Bluetooth-enabled handset in the piconet via a mobile handset base station, in accordance with an embodiment of the invention.

FIG. 4C is a diagram illustrating an exemplary mode of operation for communicating between or among Bluetooth-enabled handsets in the piconet via a mobile handset base station, in accordance with an embodiment of the invention.

FIG. 4D is a diagram illustrating an exemplary mode of operation for communicating between a Bluetooth-enabled handset and a Bluetooth-enabled communication device via a mobile handset base station, in accordance with an embodiment of the invention.

FIG. 4E is a diagram illustrating an exemplary mode of operation for communicating between a wireless network and a plurality of Bluetooth-enabled communication devices in the piconet via a mobile handset base station, in accordance with an embodiment of the invention.

FIG. 5 is a diagram illustrating an exemplary mode of operation that utilizes a wireless device for receiving communication sent to a mobile handset base station from a wireless network, in accordance with an embodiment of the invention.

FIG. 6 is a flow diagram illustrating exemplary steps for establishing communication between a wireless device in the piconet and a wireless network via a mobile handset base station, in accordance with an embodiment of the invention.

FIG. 7 is a flow diagram illustrating exemplary steps for establishing communication between a wireless network and at least one wireless device in the piconet via a mobile handset base station, in accordance with an embodiment of the invention.

### DETAILED DESCRIPTION OF THE INVENTION

Certain embodiments of the invention may be found in a method and system for a mobile piconet base station. Aspects of the invention may comprise switching and/or routing capabilities in mobile handset that may enable wireless devices to communicate with each other and/or with a wireless network via the mobile handset. The mobile handset operates as a base station for wireless devices within a personal area or piconet. For voice communication, for example, communication between a wireless device within the piconet and a cellular network or a voice-over-IP (VolP) network may be established via the mobile handset. The selection between the cellular or VolP network may be based on rate price and/or on features available in each of the networks, for example. Communication between the wireless devices and the base station mobile handset may occur via a Bluetooth connection and/or another type of wireless technology, for example. The wireless devices may be low-cost, small form factor mobile handsets, for example.

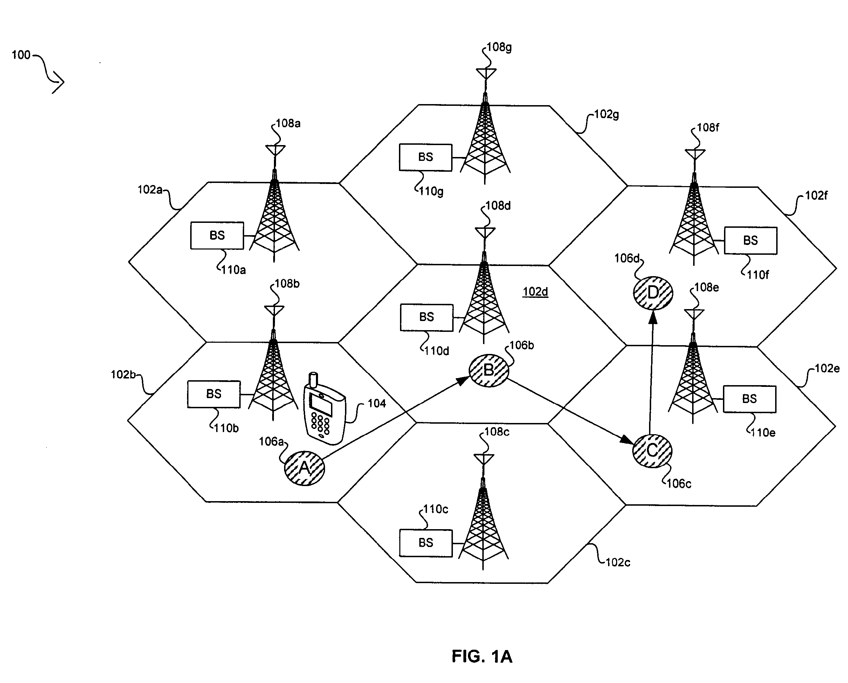

FIG. 1A is a diagram illustrating an exemplary cellular network coverage area, in accordance with an embodiment of the invention. Referring to FIG. 1A, there is shown a portion of a cellular network 100 that may comprise a first network cell 102a, a second network cell 102b, a third network cell 102c, a fourth network cell 102d, a fifth network cell 102e, a sixth network cell 102f, and a seventh network cell 102g. Also shown in FIG. 1A is a mobile handset base station 104. Associated with each of the network cells shown in the portion of the cellular network 100 may be a base station (BS) and a communication antenna. In this regard, there may be base stations 110a, ..., 110g and communication antennas 108a, ..., 108g that may be associated with the network cells 102a, ..., 102g, respectively. In some instances, more than one communication antenna and/or base station may be associated with a network cell.

The base stations 110a, ..., 110g may comprise suitable logic, circuitry, and/or code that may enable communication with a mobile terminal, such as the mobile handset base station 104, for example, via at least one of a plurality of cellular technologies. The base stations 110a, ..., 110g may enable processing and/or generation of signals necessary to establish, maintain, and/or terminate communication with a mobile terminal, such as the mobile handset base station 104, for example. The base stations 110a, ..., 110g may utilize cellular technologies such as global system for mobile communications (GSM), general packet radio service (GPRS), and/or enhanced data rates for GSM evolution (EDGE) technologies, for example. In this regard, each of the base stations in the network cells may utilize a corresponding GSM carrier frequency with a 200 kHz bandwidth, for example, to communicate with a mobile terminal in the network. The base stations 110a, ..., 110g may also utilize cellular technologies such as wideband CDMA (WCDMA), universal mobile telecommunications system (UMTS), and/or high speed downlink packet access (HSDPA) technologies, for example.

The communication antennas 108a, ..., 108g may comprise suitable logic, circuitry, and/or code that may enable transmission and/or reception of signals to and/or from mobile terminals, such as the mobile handset base station 104, for example. The communication antennas 108a, ..., 108g may be communicatively coupled to the base stations 1110a, ..., 110g, respectively. The communication antenna 108a may provide cellular communication coverage to mobile terminals in the geographic area or region that corresponds to the network cell 102a. Similarly, communication antennas 108b, ..., 108g may provide cellular communication coverage to mobile terminals in the geographic areas or regions that correspond to the network cells 102b, ..., 102g, respectively. In some instances, there may be an overlap in the cellular communication coverage provided to a mobile terminal by adjacent or close network cells.

The mobile handset base station 104 may comprise suitable logic, circuitry, and/or code that may enable communication with the cellular network 100 over a plurality of radio access technologies, such as GSM and/or WCDMA technologies. The GSM technologies supported by the mobile handset base station 104 may be GSM, GPRS, and/or EDGE technologies, for example. The WCDMA technologies supported by the mobile handset base station 104 may be WCDMA, UMTS, and/or HSDPA technologies, for example. The mobile handset base station 104 may comprise cellular integrated circuits for receiving, processing, and/or transmitting cellular channels. The mobile handset base station 104 may enable communication via a plurality of uplink and downlink cellular channels, for example. The mobile terminal 102 may enable processing and/or generation of signals necessary to establish and/or maintain communication with network cells.

The mobile handset base station 104 may also comprise suitable logic, circuitry, and/or code that may enable communication with closely located wireless devices over a plurality of radio access technologies, such as Bluetooth, for example. The mobile handset base station 104 may also enable switching and/or routing operations to enable communication between at least a portion of the closely located wireless devices. Moreover, the mobile handset base station 104 may also enable switching and/or routing operations to enable communication between the cellular network 100 and at least a portion of the closely located wireless devices.

In operation, the mobile handset base station 104 may be located in an initial position 106a, also labeled location A, and may receive cellular communication coverage from network cell 102b. In this regard, the mobile handset base station 104 may communicate with the BS 110b via the communication antenna 108b utilizing at least one of a plurality of cellular technologies. Over time, the user of the mobile handset base station 104 may move from location A to other locations, for example. This is illustrated by moving from position A to a second position 106b, also labeled location B, followed by a move to a third position 106c, also labeled location C, and followed by a move to a final position 106, also labeled location D. Cellular communication coverage may be provided to the mobile handset base station 104 as it moves from locations B through D by the network cells 102d, 102e, and 102f, respectively.

In each of the exemplary locations illustrated in FIG. 1A, the mobile handset base station 104 may enable communication among closely located wireless devices and/or between the closely located wireless devices and the cellular network 100. In this regard, the mobile handset base station 104 may operate as a mobile base station that enables access to the cellular network 100 by- closely located wireless devices that do not have direct access to the cellular network 100.

The exemplary locations illustrated in FIG. 1A may correspond to a different mode of operation for the mobile handset base station 104. For example, location A may correspond to the user's place of work and the mobile handset base station 104 may operate in a particular mode in location A. In the work place, the mobile handset base station 104 may provide voice communication while it may also enable the user to wirelessly communicate with a plurality of office devices such as printers and computers, for example.

In another example, location D may correspond to the user's home and the mobile handset base station 104 may operate in a different mode in location D. In the home, the mobile handset base station 104 may enable voice communication while it may also enable routing and/or switching operations for other wireless devices in the home to communicate with the cellular network 100 via the mobile handset base station 104. In this regard, the mobile handset base station 104 may be utilized to replace cordless phones in the home while also enabling family members to use small and/or cost effective phones that communicate via the mobile handset base station 104.

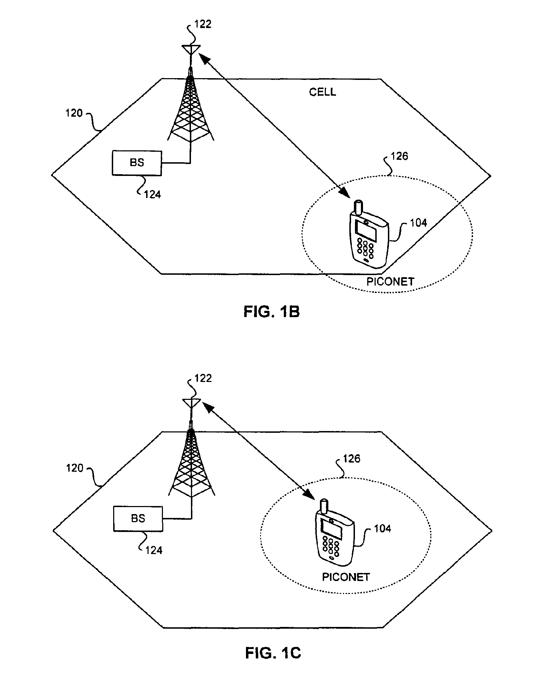

FIGS. 1B-1C are diagrams illustrating exemplary personal network regions or piconets associated with the mobile handset base station in the cellular network in FIG. 1A, in accordance with an embodiment of the invention. Referring to FIG. 1B, there is shown a network cell 120 and the mobile handset base station 104. Associated with the network cell 120 may be a base station (BS) 124 and a communication antenna 122. Cellular communication coverage may be provided to the mobile handset base station 104 by the network cell 120, for example. Moreover, the mobile handset base station 104 may also enable closely located wireless devices to communicate with the network cell 120. In this regard, a personal network region or piconet 126 may correspond to the geographic area or region where the mobile handset base station 104 provides coverage to closely located wireless devices. The geographic area or region of coverage provided by the mobile handset base station 104 may depend in part on transmission power employed by the type of communication technology utilized to communicate with closely located wireless devices, for example. For Bluetooth applications, the range of a Bluetooth-enabled device is approximately 10 m, for example.

As illustrated by FIG. 1B, the geographic area or region of coverage provided by the piconet 126 associated with the mobile handset base station 104 need not be located within the geographic area or region of coverage provided by the network cell 120. In some instances, the region of coverage provided by the piconet 126 may overlap more than one network cell. Referring to FIG. 1C, there is shown an example where the geographic area or region of coverage provided by the piconet 126 associated with the mobile handset base station 104 is located within the geographic area or region of coverage provided by the network cell 120. In this exemplary embodiment of the invention, no overlap exists with the region of coverage provided by other network cells.

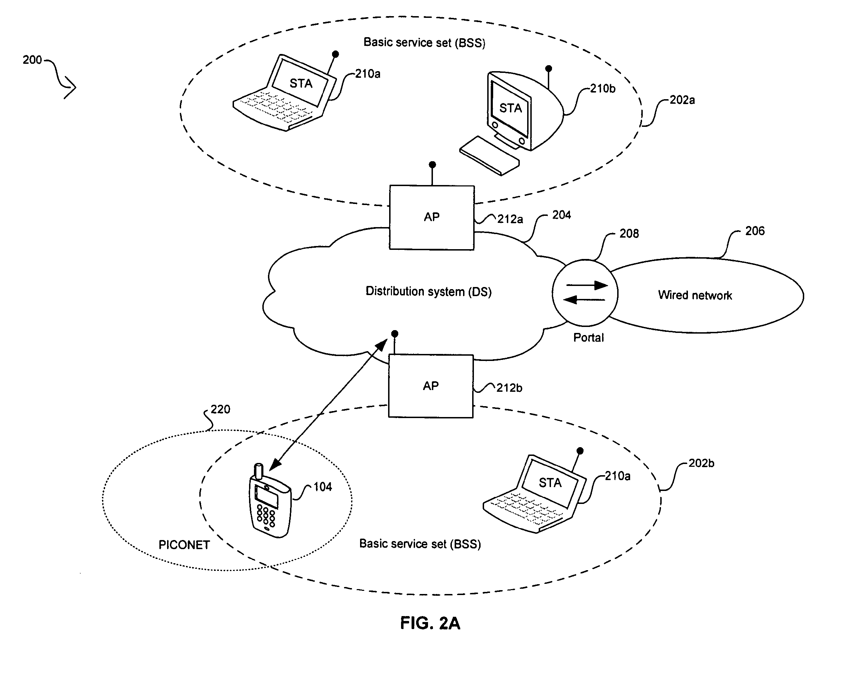

FIG. 2A is a diagram illustrating an exemplary wireless local area network (WLAN) coverage area, in accordance with an embodiment of the invention. Referring to FIG. 2A, the exemplary WLAN infrastructure network 200 shown may comprise a first basic service set (BSS) 202a, a second BSS 202b, a distributed system (DS) 204, a wired network 206, a portal 208, a first access point (AP) 212a, a second AP 202b, a plurality of WLAN stations (STAs), and the mobile handset base station 104 illustrated in FIG. 1A. The BSSs 202a and 202b may represent a fundamental building block of the IEEE 802.11 (WLAN) architecture and may be defined as a group of stations (STAs) that are under the direct control of a single coordination function. The geographical area or region covered by a BSS is known as the basic service area (BSA). The DS 204 may be utilized to integrate the BSSs 202a and 202b and may comprise suitable hardware, logic, circuitry, and/or code that may be enabled to operate as a backbone network that is responsible for Medium Access Control (MAC) level transport in the WLAN infrastructure network 200. The DS 204, as specified by the IEEE 802.11 standard, is implementation independent. For example, the DS 204 may be implemented utilizing IEEE 802.3 Ethernet Local Area Network (LAN), IEEE 802.4 token bus LAN, IEEE 802.5 token ring LAN, Fiber Distributed Data Interface (FDDI) Metropolitan Area Network (MAN), or another IEEE 802.11 wireless medium. The DS 204 may be implemented utilizing the same physical medium as either the first BSS 202a or the second BSS 202b, for example. However, the DS 204 is logically different from the BSSs and may be utilized only to transfer packets between the BSSs and/or to transfer packets between the BSSs and the wired network 206.

The wired network 206 may comprise suitable hardware, logic, circuitry, and/or code that may be enabled to provide wired networking operations. The wired network 206 may be accessed from the WLAN infrastructure network 200 via the portal 208. The portal 208 may comprise suitable hardware, logic, circuitry, and/or code that may be enabled to integrate the WLAN infrastructure network 200 with non-IEEE 802.11 networks. Moreover, the portal 208 may also enable the functional operations of a bridge, such as range extension and/or translation between different frame formats, in order to integrate the WLAN infrastructure network 100 with IEEE 802.11-based networks.

The APs 212a and 212b may comprise suitable hardware, logic, circuitry, and/or code that may enable support of range extension of the WLAN infrastructure network 200 by providing the integration points necessary for network connectivity between the BSSs. The STA 210a and the STA 210b correspond to WLAN-enabled terminals that may comprise suitable hardware, logic, circuitry, and/or code that may be enabled to provide connectivity to the WLAN infrastructure network 200 via the APs. In this regard, the mobile handset base station 104 may also correspond to a WLAN-enabled terminal that may comprise suitable logic, circuitry, and/or code that may be enabled to provide connectivity to the WLAN infrastructure network 200 via the APs. The STA 210a shown is a laptop computer and may correspond to a mobile station or terminal within the BSS and the STA 210b shown is a desktop computer and may correspond to a fixed or stationary terminal within the BSS. Each BSS may comprise a plurality of mobile or fixed stations and may not be limited to the exemplary implementation shown in FIG. 2A.

In addition to enabling communication with the WLAN infrastructure network 200, the mobile handset base station 104 may also provide routing and/or switching operations that enable communication among closely located wireless devices within the region covered by the piconet 220. Moreover, the mobile handset base station 104 may also provide routing and/or switching operations that enable communication between the closely located wireless devices and the WLAN infrastructure network 200. As shown in FIG. 2A, the piconet 220 associated with the mobile handset base station 104 need not be located within the geographic area or region of coverage provided by the BSS 202b. In some instances, the region of coverage provided by the piconet 220 may overlap more than one BSS.

In operation, the mobile handset base station 104 may be covered by the BSS 202a and may establish communication with the WLAN infrastructure network 200 via the AP 212b, for example. The wireless connection between the mobile handset base station 104 and the WLAN infrastructure network 200 may be utilized for voice and/or data communication. For voice communication, for example, the connection between the mobile handset base station 104 and the WLAN infrastructure network 200 may be utilized for voice-over-IP (VolP) communications. The mobile handset base station 104, in addition to enabling a user to establish voice and/or data communication with the WLAN infrastructure network 200, may also enable users of closely located wireless devices within the piconet 220 to establish data and/or voice communication with the WLAN infrastructure network 200.

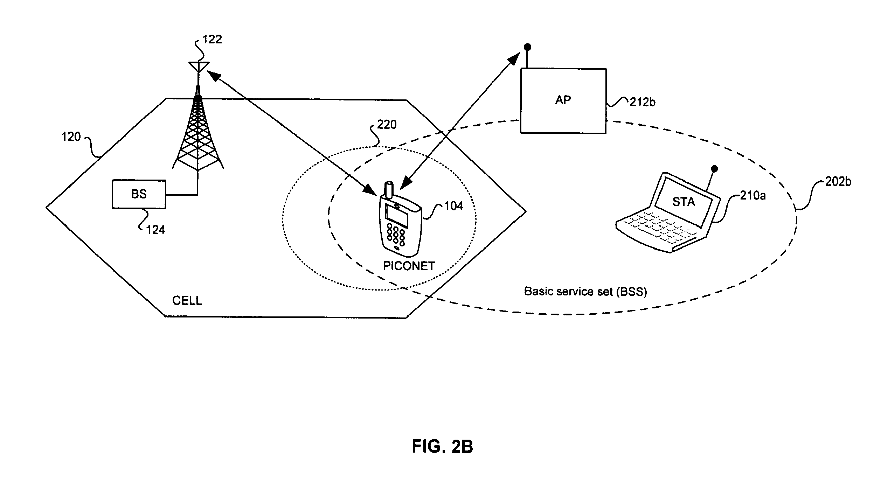

FIG. 2B is a diagram illustrating exemplary cellular and WLAN networks for communicating with a mobile handset base station, in accordance with an embodiment of the invention. Referring to FIG. 2B, there is shown a network cell 120 associated with the cellular network 100 in FIG. 1A, a mobile handset base station 104, and a basic service set 202b associated with the WLAN infrastructure network 200 in FIG. 2A. The network cell 120 may comprise a communication antenna 122 and a base station 124 as illustrated in FIGS. 1B-1C. The basic service set 202b may comprise an access point 212b as illustrated in FIG. 2A. The mobile handset base station 104 may provide coverage service in the region defined by the piconet 220.

The region of coverage of the network cell 120, the basic service station 202b, and the piconet 220 may overlap, enabling the user of the mobile handset base station 104 to communicate with either a cellular network or with a WLAN network. In this regard, the mobile handset base station 104 may be enabled to communicate with both networks concurrently, for example. Moreover, a user of closely located wireless devices within the piconet 220, that may not be enabled to communicate directly with either the cellular network or the WLAN network, may communicate with either or both networks via the routing and/or switching operations provided by the mobile handset base station 104. The mobile handset base station 104 may operate as a base station that enables the closely located wireless devices within the piconet 220 to establish communication links with the cellular and/or WLAN network. For example, the closely located wireless devices may utilize a small form factor design that makes it attractive and convenient for users but that does not enable long range communication with, for example, the location of the communication antenna 122 and the AP 212. However, the mobile handset base station 104 may be a larger device and, for example, may have a larger battery and/or may utilize stronger transmission amplifiers, that may provide sufficient transmission power to establish and/or maintain long range communication with either or both the communication antenna 122 and the AP 212b. In this regard, the closely located wireless devices may communicate with the cellular network 100 and/or with the WLAN infrastructure network 200 via the routing and/or switching operations provided by mobile handset base station 104.

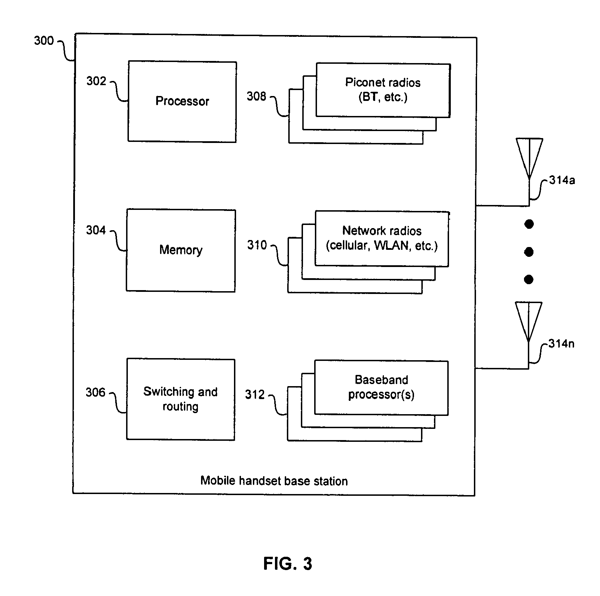

FIG. 3 is a block diagram illustrating an exemplary system for a mobile handset base station, in accordance with an embodiment of the invention. Referring to FIG. 3, there is shown a mobile handset base station 300 that may comprise a processor 302, a memory 304, a switching and/or routing block 306, at least one piconet radio 308, at least one network radio 310, at least one baseband processor 312, and antennas 314a, ..., 314n. In some instances, at least a portion of the components of the mobile handset base station 300 may be integrated into a single device, for example.

The processor 302 may comprise suitable logic, circuitry, and/or code that may enable controlling and/or managing operations of the mobile handset base station 300. In this regard, user applications may be executed on the processor 302, for example. The memory 304 may comprise suitable logic, circuitry, and/or code that may enable storing information associated with the operation of the mobile handset base station 300 and/or information associated with data received by the mobile handset base station 300. For example, information that may be utilized for routing and/or switching operations may be stored in the memory 304. Moreover, audio files, video files, and/or data files that may be accessed either by a network or by a closely located wireless device may be stored in the memory 304.

The switching and/or routing block 306 may comprise suitable logic, circuitry, and/or code that may enable transmission and/or reception of data and/or voice via the mobile handset base station 300. In this regard, the switching and/or routing block 306 may be utilized when establishing communication between or among closely located wireless devices within the piconet supported by the mobile handset base station 300 or when establishing communication between at least one of the closely located wireless devices within the piconet and at least one network.

The piconet radio 308 may comprise suitable logic, circuitry, and/or code that may enable transmitting and/or receiving signals to and/or from closely located wireless devices within the piconet supported by the mobile handset base station 300. In this regard, the piconet radio 308 may utilize at least one of the antennas 314a, ..., 314n for transmitting and/or receiving signals. The piconet radio 308 may enable processing of received signals and/or signals to be transmitted. For example, the piconet radio 308 may convert received analog signals into digital signals and/or convert digital signals into analog signals for transmission. The piconet radio 308 may enable downconverting received signals and/or upconverting signals for transmission. An example of a piconet radio 308 may be a Bluetooth radio. Notwithstanding, a piconet radio 308 need not be limited to a Bluetooth radio and other wireless technologies may also be utilized.

The network radio 310 may comprise suitable logic, circuitry, and/or code that may enable transmission and/or reception of signals to and/or from networks supported by the mobile handset base station 300, respectively. In this regard, the network radio 310 may utilize at least one of the antennas 314a, ..., 314n for transmitting and/or receiving signals. The network radio 310 may enable processing of received signals and/or signals to be transmitted. For example, the network radio 310 may convert received analog signals into digital signals and/or may convert digital signals into analog signals for transmission. The network radio 308 may enable downconversion of received signals and/or upconversion of signals for transmission. Examples of a network radio 310 may a cellular radio or a WLAN radio. A cellular radio may support at least one of cellular technologies such as global system for mobile communications (GSM), general packet radio service (GPRS), enhanced data rates for GSM evolution (EDGE), wideband CDMA (WCDMA), universal mobile telecommunications system (UMTS), and/or high speed downlink packet access (HSDPA) technologies. Notwithstanding, a network radio 310 need not be limited to a cellular radio or a WLAN radio.

The baseband processor 312 may comprise suitable logic, circuitry, and/or code that may enable processing of baseband signals that have been received from a piconet radio 308 or a network radio 310. Moreover, the baseband processor 312 may also enable processing of baseband signals for transmission via a piconet radio 308 or a network radio 310. The baseband processor 312 may perform, for example, digital signal processing operations. The baseband processor 312 may also provide control operations that may be utilized to modify the operations of a piconet radio 308 or a network radio 310.

In operation, a communication connection, such as a Bluetooth connection, for example, may be established between the mobile handset base station 300 and a closely located wireless device via a piconet radio 308. A communication connection, such as a cellular or WLAN connection, for example, may also be established between the mobile handset base station 300 and a network via a network radio. The baseband processor 312 may process data received and/or to be transmitted via the radios. The closely located wireless device and the network may communicate via the mobile handset base station 300 by utilizing the switching and/or routing operations available in the switching and/or routing block 306. Data from the piconet radio 308 may be processed and the proper routing and/or switching information may be provided for communication to the network via the network radio 310. Similarly, data from the network radio 310 may be processed and the proper routing and/or switching information may be provided for communication to the closely located wireless device via the piconet radio 308. The memory 304 may be utilized to obtain routing and/or switching information, for example. The memory 304 may also be utilized to store audio, video, and/or data received from the closely located wireless device and/or the network. The processor 302 may control the operations of the various components of the mobile handset base station 300.

In another embodiment of the invention, a communication connection, such as a Bluetooth connection, for example, may be established between the mobile handset base station 300 and at least two closely located wireless device via a piconet radio 308. The baseband processor 312 may process data received and/or to be transmitted via the radio. The closely located wireless devices may communicate via the mobile handset base station 300 by utilizing the switching and/or routing operations available in the switching and/or routing block 306. Data received from one device by the piconet radio 308 may be processed and the proper routing and/or switching information may be provided for communication to a different device. The memory 304 may be utilized to obtain routing and/or switching information, for example. The memory 304 may also be utilized to store audio, video, and/or data received from the closely located wireless device and/or the network. The processor 302 may control the operations of the various components of the mobile handset base station 300.

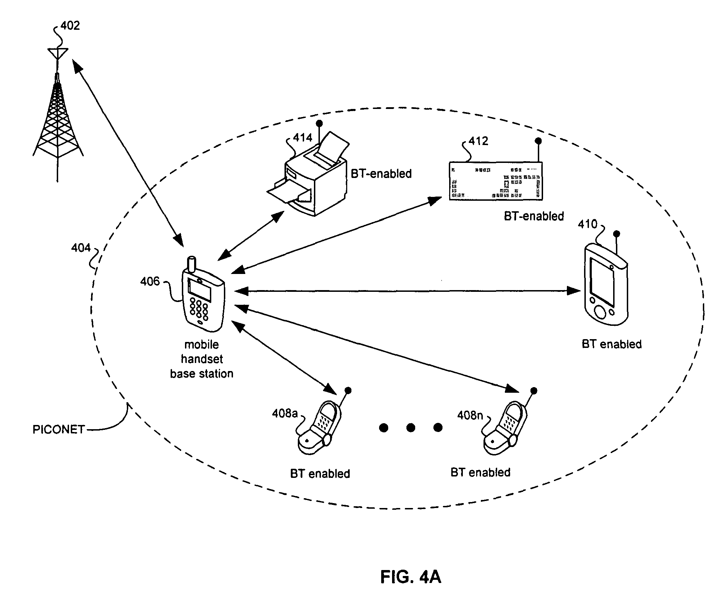

FIG. 4A is a diagram illustrating exemplary communication within a piconet via a mobile handset base station, in accordance with an embodiment of the invention. Referring to FIG. 4A, there is shown a mobile handset base station 406 with an associated geographic area or region of coverage illustrated by the piconet 404. Also shown is a communication tower 402 associated with a network cell in a cellular network. The mobile handset base station 406 may correspond to the mobile handset base stations 104 and 300 in FIGS. 1A-3, for example. The communication tower 402 may correspond to one of the communication towers 108a, ..., 108g in FIG. 1A, for example. A plurality of closely located wireless devices may be comprised within the area of coverage provided by the mobile handset base station 404. The closely located wireless devices may comprise a plurality of mobile handsets 408a, ..., 408n, a personal digital assistant (PDA) 410, a keyboard 412, and a printer 414, for example. The closely located wireless devices may be Bluetooth enabled, for example. Notwithstanding the closely located wireless devices shown in FIG. 4A, the invention need not be so limited and other wireless devices and/or communication technologies may also be utilized.

The mobile handset base station 404 may communicate with a cellular network via the communication tower 402. In this regard, the closely located wireless devices may also communicate with the cellular network via the mobile handset base station 404. The mobile handsets 408a, ..., 408n may comprise suitable logic, circuitry, and/or code that may enable communication via the mobile handset base station 406. The mobile handsets 408a, ..., 408n may be smaller, may have fewer features, and/or may utilize less power than the mobile handset base station 406. In this regard, the smaller size and/or lower cost may enable handset manufacturers to make the mobile handsets 408a, ..., 408n more attractive, stylish, and/or convenient to users while comprising a keypad that enables the mobile handsets 408a, ..., 408n to operate like a regular phone. The mobile handsets 408a, ..., 408n may communicate with other closely located wireless devices via the mobile handset base station 406.

The PDA 410, the keyboard 412, and/or the printer 414 may comprise suitable logic, circuitry, and/or code that may enable communication via the mobile handset base station 406. The keyboard 412 and/or the printer 414 may enable communication of data via the mobile handset base station 406. The PDA 410 may enable communication of data, voice, and/or video via the mobile handset base station 406. The PDA 410, the keyboard 412, and/or the printer 414 may communicate with other closely located wireless devices via the mobile handset base station 406.

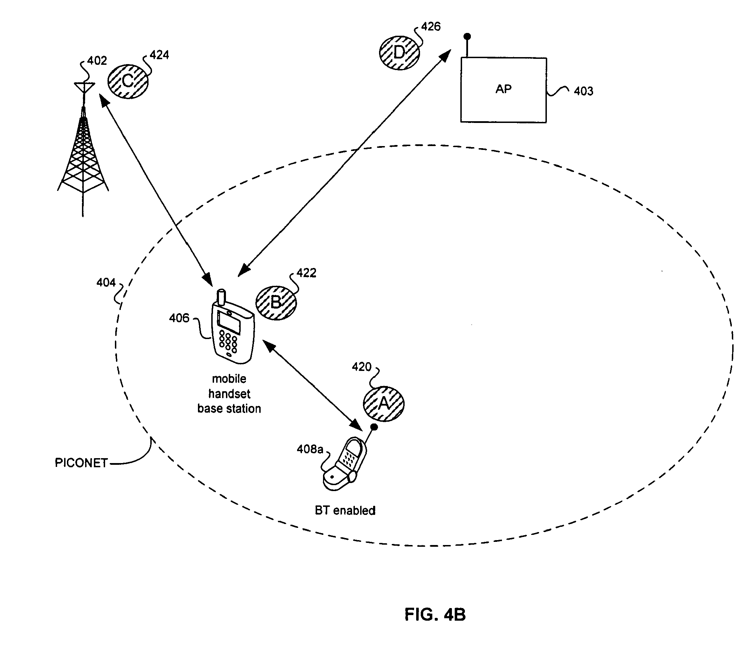

FIG. 4B is a diagram illustrating an exemplary mode of operation for communicating between a wireless network and a Bluetooth-enabled handset in the piconet via a mobile handset base station, in accordance with an embodiment of the invention. Referring to FIG. 4B, there is shown the mobile handset base station 406, the communication tower 402, and the piconet 404 in FIG. 4A. Also shown is an access point (AP) 403. The mobile handset 408a may be in location 420, also labeled position A, the mobile handset base station 406 may be in location 422, also labeled position B, the communication tower 402 may be in location 424, also labeled position C, and the AP 403 may be in location 426, also labeled position D.

The position of the mobile handset base station 406, that is, position B, is such that it is located within the cellular coverage provided by the communication tower 402 in position C and WLAN coverage provided by the access point 403 in position D. In this regard, the mobile handset base station 406 may communicate with either a cellular network or a WLAN network, for example. The WLAN network may be enabled to provide voice-over-IP (VolP) communication, for example. The position of the mobile handset 408a, that is, position A, is such that it is located within the geographic area or region of coverage of the mobile handset base station 406, located in position A, and illustrated by the piconet 404.

In operation, the mobile handset 408a may be utilized to establish a phone call. The mobile handset 408a may not be enabled to communicate directly with a network to enable the phone call to be established. The mobile handset 408a may instead establish communication with the mobile handset base station 406 via a type of radio communication supported by both the mobile handset 408a and the mobile handset base station 406. In the exemplary embodiment described in FIG. 4B, the mobile handset 408a may be Bluetooth (BT) enabled and may communicate with the mobile handset base station 406 via a Bluetooth connection.

The mobile handset base station 406 may then establish the phone call by establishing communication between the mobile handset 408a and either a cellular network via the communication antenna 402 in position C or with a WLAN supporting VoIP via the access point 403 in position D. In this regard the mobile handset base station 406 may utilize routing and/or switching operations to establish the connection. The mobile handset base station 406 may decide whether to select the cellular network and the corresponding cellular network provider or the WLAN network based on rate information, user information, and/or other related information. For example, the mobile handset base station 406 may utilize current rates for either network, remaining minutes available to the user associated with the mobile handset base station 406, and/or special rates or discounts available to the user of the mobile handset base station 406 to determine whether to select the cellular network or the WLAN network for establishing the phone call originated by the mobile handset 408a. The information utilized by the mobile handset base station 406 may be stored in memory, such as the memory 304 in FIG. 3, for example.

The mode of operation described in FIG. 4B may occur, for example, when the mobile handset base station 406 is brought home and is docked for recharging and wireless devices, such as the mobile handsets 408a, ..., 408n, for example, may utilize the mobile handset base station 406 to make phone calls. In this regard, the wireless devices may be enabled to communicate with the mobile handset base station 406 via at least one wireless protocol such as Bluetooth, WLAN, ZigBee, and/or ultra-wideband (UWB), for example. In some instances, the mobile handset base station 406 may enable a wireless device to establish a phone call via a personal computer (PC) by utilizing a PC-based commercially available VolP service.

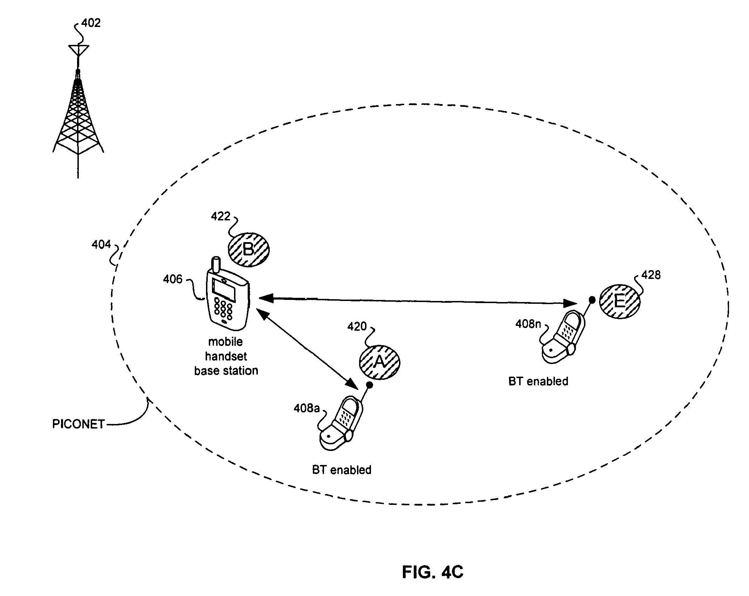

FIG. 4C is a diagram illustrating an exemplary mode of operation for communicating between or among Bluetooth-enabled handsets in the piconet via a mobile handset base station, in accordance with an embodiment of the invention. Referring to FIG. 4C there is shown the mobile handset base station 406, the communication tower 402, and the piconet 404 in FIG. 4A. Also shown are a first mobile handset 408a and a second mobile handset 408n. The first mobile handset 408a may be in location 420, also labeled position A, the mobile handset base station 406 may be in location 422, also labeled position B, and second mobile handset 408n may be in location 428, also labeled position E. The first and second mobile handsets 408a and 408n are both located within the geographic region or area of coverage provided by the mobile handset base station 406 as illustrated by the piconet 404.

In operation, the first mobile handset 408a in position A may be utilized to establish a phone call or voice communication with the second mobile handset 408a in position E. As a result of its small size and reduced features available, the first mobile handset 408a may not be enabled to communicate directly with the second mobile handset 408a to enable the phone call to be established. The first mobile handset 408a may instead establish communication with the mobile handset base station 406 via a type of radio communication supported by both the first mobile handset 408a and the mobile handset base station 406. In the exemplary embodiment of the invention disclosed in FIG. 4C, the first mobile handset 408a may be Bluetooth (BT) enabled and may communicate with the mobile handset base station 406 via a Bluetooth connection.

The mobile handset base station 406 may then establish the phone call by establishing communication between the first mobile handset 408a and the second mobile handset 408n. The mobile handset base station 406 may establish communication with the second mobile handset 408n via a type of radio communication supported by both the second mobile handset 408n and the mobile handset base station 406. In the exemplary embodiment described in FIG. 4C, the second mobile handset 408n may be Bluetooth (BT) enabled and may communicate with the mobile handset base station 406 via a Bluetooth connection. The mobile handset base station 406 may utilize routing and/or switching operations to establish the connection between the first and second mobile handsets 408a and 408n.

The mode of operation described in FIG. 4C may occur in, for example, a home where the use of multiple cordless phones in various locations within the home may be replaced by a central mobile handset base station and multiple smaller mobile handsets that may be utilized by various members of the household. Notwithstanding the illustrative example provided in FIG. 4C, other embodiments of the invention may comprise communication between closely located wireless devices within the piconet 404 other than voice communication, the use of wireless technologies other than Bluetooth technology, and/or communication among more than two closely located wireless devices.

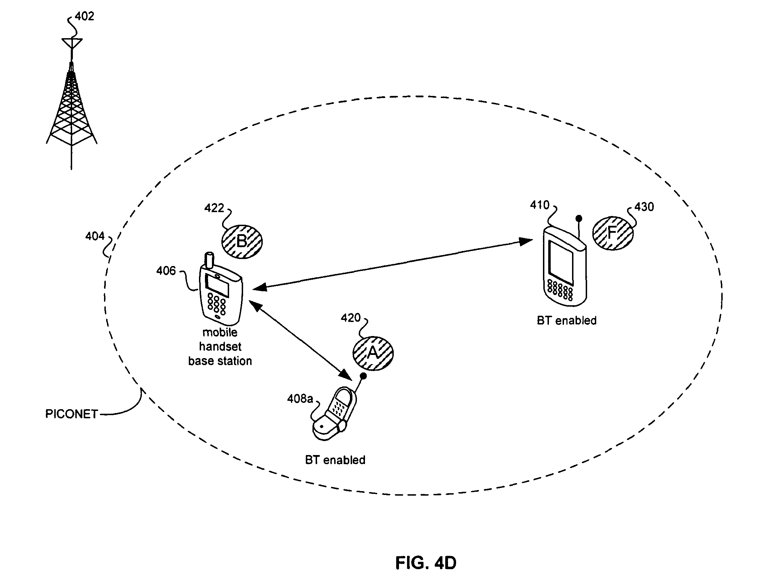

FIG. 4D is a diagram illustrating an exemplary mode of operation for communicating between a Bluetooth-enabled handset and a Bluetooth-enabled communication device via a mobile handset base station, in accordance with an embodiment of the invention. Referring to FIG. 4D there is shown the mobile handset base station 406, the communication tower 402, and the piconet 404 in FIG. 4A. Also shown are a mobile handset 408a and a communication device, such as the PDA 410, that is enabled for voice and/or data communication. The mobile handset 408a may be in location 420, also labeled position A, the mobile handset base station 406 may be in location 422, also labeled position B, and the PDA 410 may be in location 430, also labeled position F. The mobile handset 408a and the PDA 410 are both located within the geographic region or area of coverage provided by the mobile handset base station 406 as illustrated by the piconet 404.

In operation, the mobile handset 408a in position A may be utilized to establish a phone call or voice communication and/or data communication with the PDA 410 in position F. As a result of its small size and reduced features available, the mobile handset 408a may not be enabled to communicate directly with the PDA 410 to enable the phone call to be established. The mobile handset 410 may instead establish communication with the mobile handset base station 406 via a type of radio communication supported by both the mobile handset 408a and the mobile handset base station 406. In the exemplary embodiment of the invention disclosed in FIG. 4D, the mobile handset 408a may be Bluetooth (BT) enabled and may communicate with the mobile handset base station 406 via a Bluetooth connection.

The mobile handset base station 406 may then establish the phone call by establishing communication between the mobile handset 408a and the PDA 410. The mobile handset base station 406 may establish communication with the PDA 410 via a type of radio communication supported by both the PDA 410 and the mobile handset base station 406. In the exemplary embodiment described in FIG. 4C, the PDA 410 may be Bluetooth (BT) enabled and may communicate with the mobile handset base station 406 via a Bluetooth connection. The mobile handset base station 406 may utilize routing and/or switching operations to establish the connection between the mobile handset 408a and the PDA 410. A similar approach may be followed when establishing a connection from the PDA 410 to the mobile handset 408a, for example.

The mode of operation described in FIG. 4D may also occur in, for example, a home where the use of multiple cordless phones in various locations within the home may be replaced by a central mobile handset base station and multiple smaller mobile handsets that may be utilized by various members of the household. In this regard, a user with a communication device such as the PDA 410, for example, may also utilize the centralized wireless approach enabled by the mobile handset base station.

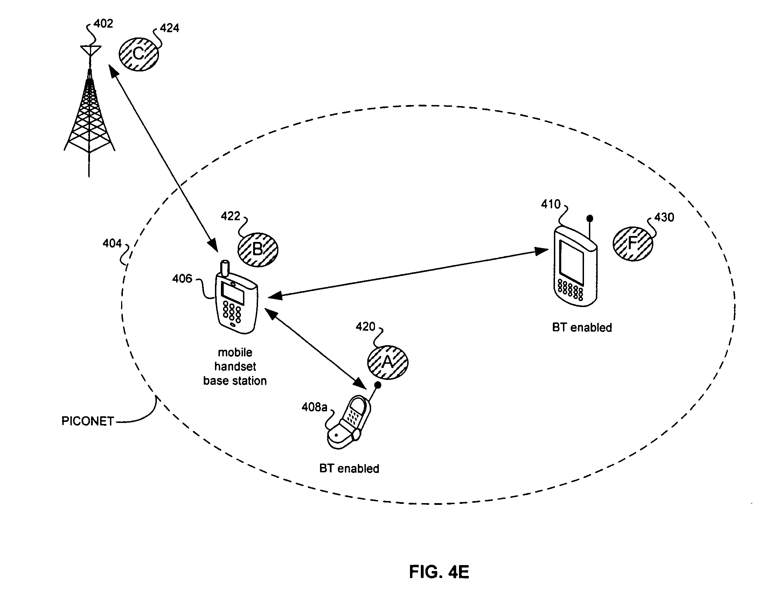

FIG. 4E is a diagram illustrating an exemplary mode of operation for communicating between a wireless network and a plurality of Bluetooth-enabled communication devices in the piconet via a mobile handset base station, in accordance with an embodiment of the invention. Referring to FIG. 4E, there is shown the mobile handset base station 406, the communication tower 402, and the piconet 404 in FIG. 4A. Also shown are the mobile handset 408a and the PDA 410. The mobile handset 408a may be in location 420, also labeled position A, the mobile handset base station 406 may be in location 422, also labeled position B, the communication tower 402 may be in location 424, also labeled position C, and the PDA 410 may be in location 430, also labeled position F. The mobile handset 408a and the PDA 410 may be both located within the geographic region or area of coverage provided by the mobile handset base station 406 as illustrated by the piconet 404.

In operation, the mobile handset 408a and/or the PDA 410, that is, the closely located wireless devices in the piconet 404, may be utilized to establish a phone call. The mobile handset 408a and/or the PDA 410 may not be enabled to communicate directly with a network to enable the phone call to be established. The wireless devices may instead establish communication with the mobile handset base station 406 via a type of radio communication supported by both the mobile handset 408a and wireless devices. In the exemplary embodiment described in FIG. 4E, the mobile handset 408a and the PDA 410 may be Bluetooth (BT) enabled and may communicate with the mobile handset base station 406 via Bluetooth connections. The mobile handset base station 406 may then establish the phone call by establishing communication between the mobile handset 408a and/or the PDA 410 and the cellular network associated with the communication antenna 402 in position C. In this regard the mobile handset base station 406 may utilize routing and/or switching operations to establish the connection. Notwithstanding the illustrative example provided in FIG. 4E, other embodiments of the invention may comprise a plurality of closely located wireless devices within the piconet 404 concurrently communicating with a network via the mobile handset base station 406..

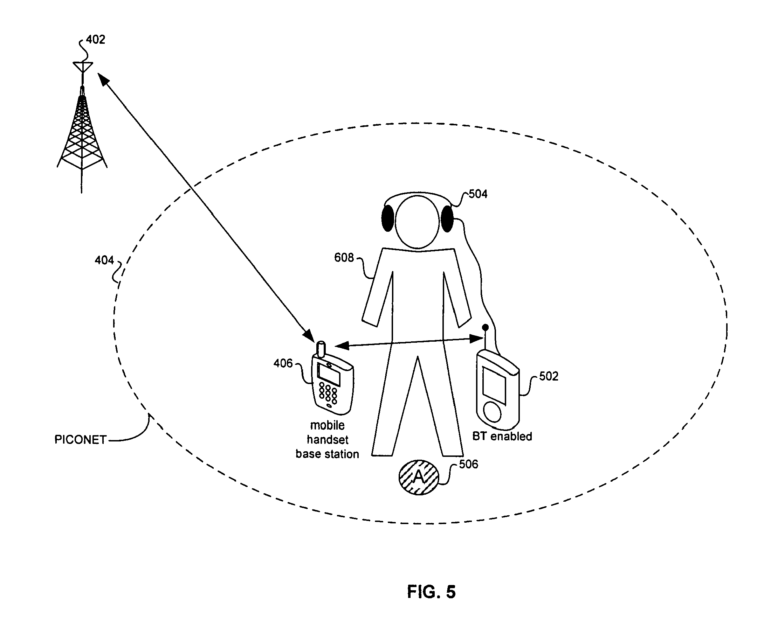

FIG. 5 is a diagram illustrating an exemplary mode of operation that utilizes a wireless device for receiving communication sent to a mobile handset base station from a wireless network, in accordance with an embodiment of the invention. Referring to FIG. 5, there is shown the mobile handset base station 406, the communication tower 402, and the piconet 404 in FIG. 4A. Also shown are a user 506, an audio or music player 502, and a headset 504. The user 506 may be in location 508, also labeled position A, and may be carrying the mobile handset base station 406, the audio or music player 502, and the headset 504. The user 506 is located within the geographic region or area of coverage provided by the mobile handset base station 406 as illustrated by the piconet 404.

In operation, the mobile handset base station 406 may receive an incoming phone call from the cellular network associated with the communication tower 422. The mobile handset base station 406 may then establish communication with the audio or music player 502 via a type of radio communication supported by both the audio player 502 and the mobile handset base station 406. In the exemplary embodiment described in FIG. 5, the mobile handset base station 406 and the audio or music player 502 may be Bluetooth (BT) enabled and may communicate via a Bluetooth connection. The phone call may then received by the user 506 via the audio or music player 502 and the headset 504. The user 506 need not reach for the mobile handset base station 406 when a phone call occurs but may instead receive the phone call via the audio or music player 502. Voice-enabled wireless devices other than an audio or music player may also be utilized in a similar approach.

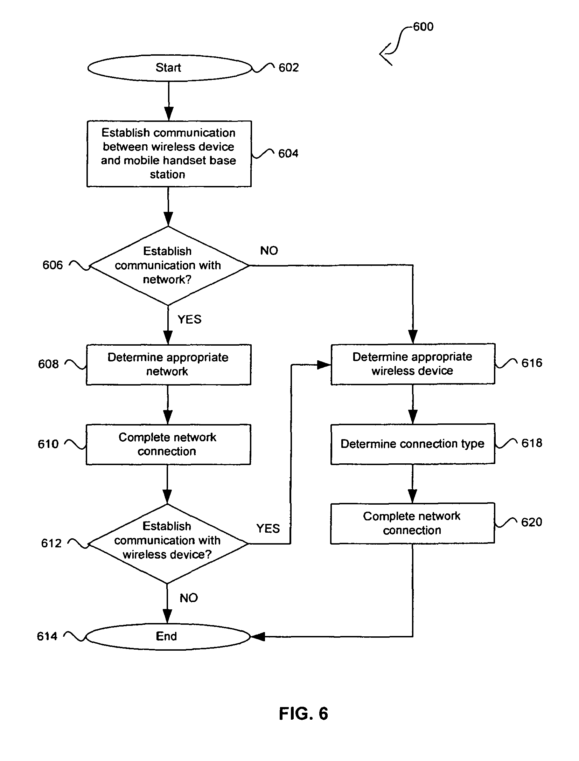

FIG. 6 is a flow diagram illustrating exemplary steps for establishing communication between a wireless device in the piconet and a wireless network via a mobile handset base station, in accordance with an embodiment of the invention. Referring to FIG. 6, there is shown a flow diagram 600. After start step 602, in step 604, a wireless device within the piconet of a mobile handset base station, such as the mobile handset base station 104 and 406 in FIGS. 1A-5, may establish communication with the mobile handset base station. Communication between the mobile handset base station and the wireless device in the piconet may be via one of a plurality of wireless technologies, such as Bluetooth technology, for example, that may be supported by the mobile handset base station and/or the wireless device. The wireless device may be a mobile handset, for example.

In step 606, when the wireless device is requesting communication with a network, such as a cellular network or a WLAN network, for example, via the mobile handset base station, the process may proceed to step 608. In step 608, the mobile handset base station may determine the appropriate network for communicating with the wireless device in the piconet. For example, for voice communication, such as a phone call, the mobile handset base station may determine whether a cellular call or a VoIP call via a WLAN may be more cost effective and may select the network based on calling rates. In step 610, the mobile handset base station may complete the connection by establishing communication with the appropriate network. In this regard, the mobile handset base station may utilize routing and/or switching operations to establish the connection between the wireless device in the piconet and the appropriate network. In step 612, when the wireless device need not communicate with another wireless device in the piconet, the process may proceed to end step 614. When the wireless device does need to communicate with another wireless device in the piconet, the process may proceed to step 616.

Returning to step 606, when the wireless device is requesting communication with another wireless device in the piconet via the mobile handset base station, the process may proceed to step 616. The other or target wireless device may be a mobile handset, for example. In step 616, the mobile handset base station may determine the appropriate target wireless device for establishing communication. Information regarding the available wireless devices in the piconet may be stored in the mobile handset base station. In step 618, the mobile handset base station may determine the appropriate wireless technology that may be utilized to communicate with the target wireless device. In this regard, there may be more than one wireless technology that may be utilized for communicating with the target wireless device and the mobile handset base station may determine the appropriate connection type based on factors such as connection strength, throughput, and/or capacity, for example. An example of a wireless technology or connection type may be a Bluetooth connection. In step 620, the mobile handset base station may complete the connection by establishing communication with the appropriate target wireless device. In this regard, the mobile handset base station may utilize routing and/or switching operations to establish the connection between the initiating wireless device and the appropriate target wireless device. After step 620, the process may proceed to end step 614.

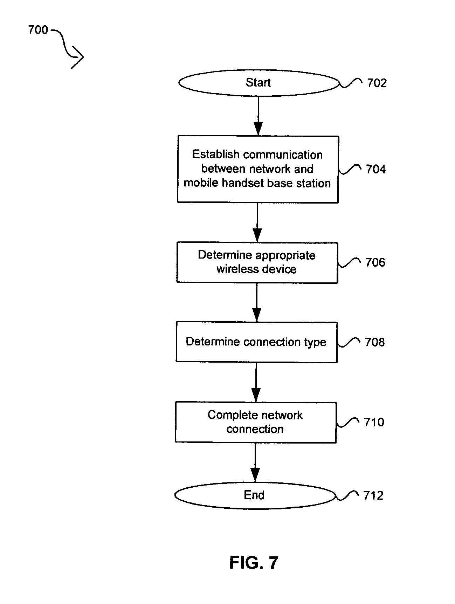

FIG. 7 is a flow diagram illustrating exemplary steps for establishing communication between a wireless network and at least one wireless device in the piconet via a mobile handset base station, in accordance with an embodiment of the invention. Referring to FIG. 7, there is shown a flow diagram 700. After start step 702, in step 704, a network may establish communication with the mobile handset base station. The network may be a cellular network or a WLAN network, for example. In step 706, the mobile handset base station may determine the appropriate target wireless device for establishing communication. Information regarding the available wireless devices in the piconet may be stored in the mobile handset base station. In step 708, the mobile handset base station may determine the appropriate wireless technology that may be utilized to communicate with the target wireless device. In this regard, there may be more than one wireless technology that may be utilized for communicating with the target wireless device and the mobile handset base station may determine the appropriate connection type based on factors such as connection strength, throughput, and/or capacity, for example. An example of a wireless technology or connection type may be a Bluetooth connection. In step 710, the mobile handset base station may complete the connection by establishing communication with the appropriate target wireless device. In this regard, the mobile handset base station may utilize routing and/or switching operations to establish the connection between the initiating network and the appropriate target wireless device in the piconet. After step 710, the process may proceed to end step 712.

As technologies continue to improve, additional features and/or connectivity may be provided via a smart phone, such as a mobile handset base station for example, while conventional mobile phones may utilize technological advances to make possible fashionable and/or small designs that are attractive as accessories to younger users. The approach described herein may enable providing the expanding list of features and applications that are becoming available in smart phone designs in a manner that is convenient, practical, and/or attractive to a user of a conventional mobile phone.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for wireless networking, the method comprising:
communicating via at least one of switching and routing capabilities in a mobile handset, information between a wireless device and at least one of a wireless network and an additional wireless device.

2. The method according to claim 1, comprising establishing communication between said wireless device and said additional wireless device via said mobile handset.

3. The method according to claim 1, comprising establishing communication between said wireless device and said wireless network via said mobile handset.

4. The method according to claim 3, comprising dynamically selecting said wireless network between a cellular network and a voice-over-lP (VolP) network for voice communication.

5. The method according to claim 4, wherein said dynamically selecting between said cellular network and said VolP network is based on cost associated with said voice communication in each of said networks.

6. A machine-readable storage having stored thereon, a computer program having at least one code section for wireless networking, the at least one code section being executable by a machine for causing the machine to perform steps comprising:
communicating via at least one of switching and routing capabilities in a mobile handset, information between a wireless device and at least one of a wireless network and an additional wireless device.

7. The machine-readable storage according to claim 6, comprising code for establishing communication between said wireless device and said additional wireless device via said mobile handset.

8. A system for wireless networking, the system comprising:
a mobile handset having at least one of switching and routing capabilities, the mobile handset enables communication of information between a wireless device and at least one of a wireless network and an additional wireless device via said at least one of switching and routing capabilities.

9. The system according to claim 8, wherein said mobile handset enables establishing communication between said wireless device and said additional wireless device.

10. The system according to claim 8, wherein said mobile handset enables establishing communication between said wireless device and said wireless network.
